# EUROPÄISCHE PATENTSCHRIFT

(11) **EP 2 839 154 B1**
(45) Veröffentlichungstag und Bekanntmachung des Hinweises auf die Patenterteilung: **10.08.2016**
(21) Anmeldenummer: 13706467.1
(22) Anmeldetag: 19.02.2013
(51) Int. Cl.: F04B 17/04, F01N 3/20, F02M 57/02

(54) **DOSIERVORRICHTUNG**
DOSING DEVICE
DISPOSITIF DE DOSAGE

(30) Priorität: 19.04.2012 DE 102012206481
(43) Veröffentlichungstag der Anmeldung: 25.02.2015
(73) Patentinhaber: Robert Bosch GmbH, 70442 Stuttgart (DE)
(72) Erfinder: BURGER, Matthias, 71711 Murr (DE)
(86) Internationale Anmeldenummer: PCT/EP2013/053274
(87) Internationale Veröffentlichungsnummer: WO 2013/156178

(56) Entgegenhaltungen:
- DE-A1- 19 542 914
- DE-A1-102008 013 440
- US-A1- 2006 013 704

## Beschreibung

Die vorliegende Erfindung betrifft ein Dosierventil nach dem Oberbegriff des Anspruchs 1 und eine Dosiervorrichtung zum Einbringen eines flüssigen Mediums in einen Abgasstrom einer Brennkraftmaschine eines Kraftfahrzeugs nach dem Anspruch 12.

### Stand der Technik

Für Brennkraftmaschinen ist die Einhaltung von Grenzwerten der Schadstoffemissionen im Abgas gesetzlich gefordert. Insbesondere bei einem Dieselfahrzeug ist eine Stickoxid-Reduzierung zwingend erforderlich. Eine Möglichkeit der Stickoxid-Reduzierung ist bspw. das bekannte Verfahren einer selektiven katalytische Reduktion (SCR). Bei diesem Verfahren wird ein flüssiges Reduktionsmittel, z.B. eine Harnstoffwasserlösung (sog. AdBlue), in den Abgasstrom im Abgasrohr eingebracht. Mit dem heißen Abgas entwickelt sich aus der Harnstoffwasserlösung Ammoniakgas, mit dem das gesundheitsschädliche Stickoxid zu unschädlichem Wasser und Stickstoff reduziert wird.

Es sind druckwellengesteuerte Dosiersysteme bekannt. Bei diesen Systemen besteht das Einspritzventil nur aus mechanischen Bauteilen. Eine Ventilnadel wird mit einem Federhalter zugehalten und öffnet ab einem gewissen hydraulischen Druck von selbst. Die Einspritzung wird somit über eine Druckwelle gesteuert, die mit Hilfe einer externen Pumpe erzeugt wird. Ein Nachteil ist die geringe Zumessgenauigkeit, da die Einspritzmenge stark von der Druckwellenform abhängt, die von äußeren Einflüssen leicht beeinflusst werden kann.

Aus der nachveröffentlichten Patentanmeldung DE 10 2011 078 852 A1 ist eine weitere Ausführungsform eines Dosierventils bekannt, bei der eine Pumpe und eine Düse in einer Einheit integriert sind. Dieses integrierte Dosiermodul (IDM) ist rücklauffrei. Die Pumpe ist so konstruiert, dass sie auch die Funktion der mengengenauen Zumessung des flüssigen Mediums übernimmt. Dies wird dadurch erreicht, dass die Pumpe rein volumetrisch fördert; so dass mit jedem Förderhub eine definierte Menge des Mediums gefördert wird. Dadurch wird eine sehr gute Zumessgenauigkeit erreicht. Ein Nachteil dieses Systems ist dessen aufwendige Herstellung. Derzeit bekannte Ausführungen beinhalten eine Steuerkante, die präzise eingestellt werden muss, und mehrere Führungen, die passgenau zueinander gefertigt werden müssen.

Die DE 10 2008 001 789 A1 zeigt eine Dosiervorrichtung, bei der ein Dosierventil durch einen Elektromagneten gesteuert wird. Dabei wird ein Durchfluss der Harnstoffwasserlösung bei vollständig geöffnetem Ventil in Abhängigkeit von einem Druck der Harnstoffwasserlösung bestimmt. Hierzu wird eine Kennlinie genutzt, die einen Zusammenhang des stationären Durchflusses über dem Druck repräsentiert. Diese Kennlinie stellt einen Zusammenhang zwischen der Ansteuerdauer des Elektromagneten und der Einspritzmenge her. Über eine geeignete Ansteuerung des Ventils wird die Dosierung der Harnstoffwasserlösung gesteuert.

Die US 2006/0013704 A1 zeigt eine weitere Dosiervorrichtung, bei der eine Pumpe durch Elektromagneten gesteuert wird.

### Offenbarung der Erfindung

Die vorliegende Erfindung unterscheidet sich vom Stand der Technik dadurch, dass in einem Abschnitt der Stufenbohrung eine Pumpenhülse dichtend geführt ist, dass in einer Mittenbohrung der Pumpenhülse ein hohlgebohrter Kolben dichtend geführt ist, dass in dem Niederdruckraum eine Magnethülse an dem Gehäuse befestigt ist, dass an einem der Magnethülse gegenüberliegenden Seite des Niederruckraums eine Anschlaghülse angeordnet ist, und dass ein Hub des Kolbens von der Magnethülse und/oder der Anschlaghülse begrenzt wird.

Durch die definierte Begrenzung des Hubs des Kolbens kann ein Fördervolumen des Dosierventils genau bestimmt werden. Daraus resultiert eine erheblich verbesserte Zumessgenauigkeit des Dosierventils bei gleichzeitig vereinfachter Ansteuerung. Die erfindungsgemäße Dosiervorrichtung ist einfach aufgebaut, kostengünstig in der Herstellung und arbeitet trotzdem sehr zuverlässig.

In einer bevorzugten Ausführungsform ist vorgesehen, dass die Anschlaghülse in einen Magnettopf eingepresst ist, und dass der Magnettopf mit dem Gehäuse verbunden ist. Dadurch wird ein fester und genauer Sitz der Anschlaghülse gewährleistet; der Magnettopf ist bevorzugt mit dem Gehäuse stoffschlüssig, z.B. durch Schweißen, verbunden. Die Anschlaghülse ist damit in ihrer axialen Position relativ zu dem Gehäuse bei der Montage einstellbar.

Vorzugsweise bestimmt eine Länge der Anschlaghülse beziehungsweise deren Einpresstiefe in dem Magnettopf den Hub des Kolbens und damit auch das Fördervolumen des Dosierventils. Damit kann durch eine entsprechend ausgebildete oder eingepresste Anschlaghülse das Fördervolumen des Dosierventils konstruktiv festgelegt und an unterschiedliche Brennkraftmaschinen bzw. Abgasvorrichtungen angepasst werden. Auch kann die Serienstreuung verschiedener Exemplare stark verringert werden. Der Aufbau der Dosiervorrichtung kann standardisiert werden und ist damit für eine GroßserienFertigung geeignet. Insbesondere auch deshalb weil eine zumindest weitgehend automatisierte Montage möglich ist.

Weiterhin ist vorgesehen, dass das Dosierventil neben dem Niederdruckraum einen Pumpenarbeitsraum aufweist, wobei der Niederdruckraum und der Pumpenarbeitsraum durch ein mechanisches Rückschlagventil getrennt sind. Das Rückschlagventil bewirkt insbesondere, dass der Pumpenarbeitsraum bei einem betriebsbedingten Druckabfall im Pumpenarbeitsraum durch einen Überdruck im Niederdruckraum auf einfache Weise automatisch wieder befüllt werden kann. Vorzugsweise ist der in Strömungsrichtung hinter der Pumpe erste Druckraum des Dosierventils der Niederdruckraum.

Dadurch, dass in dem Niederdruckraum ein Anker des Elektromagneten angeordnet ist und der Anker mit dem Kolben verbunden ist, lässt sich einerseits der Kolben einfach betätigen und andererseits auch dessen Hub auf einfache Weise begrenzen.

Die erfindungsgemäße Dosiervorrichtung zeichnet sich auch dadurch aus, dass die Pumpenhülse mit einer Druckplatte in einen Düsenraum ragt und dass in dem Düsenraum eine Düsennadel angeordnet ist, wobei der Düsenraum über eine Querbohrung mit dem Pumpenarbeitsraum hydraulisch in Verbindung steht, wenn die Druckplatte von einer Dichtkante des Gehäuses abgehoben ist. Die Pumpenhülse - und damit auch die Druckplatte - wird dabei zumindest indirekt durch den beweglichen Kolben bei angesteuertem Elektromagnet mit Druck beaufschlagt. Dabei wird auch das im Pumpenarbeitsraum befindliche Medium durch den Kolben mit Druck beaufschlagt.

Der Düsenraum ist von dem Pumpenarbeitsraum iterativ befüllbar. So wird bei einem Ansteuern des Elektromagneten aus dem vollständig befüllten Pumpenarbeitsraum der Düsenraum mit dem flüssigen Medium befüllt und entsprechend Druck aufgebaut; bei einem Ende der Bestromung des Elektromagneten wird der zuvor zumindest teilweise geleerte Pumpenarbeitsraum automatisch wieder vollständig mit flüssigem Medium befüllt.

Die erfindungsgemäße Dosiervorrichtung, insbesondere das Dosierventil, stellt aufgrund ihres Aufbaus und ihrer Konstruktion keine besonderen Anforderungen an die Fertigungstechnik. So müssen zum Beispiel die Führungen nicht passgenau zueinander ausgerichtet werden und können somit mit einer relativ großen Toleranz gefertigt werden. Alle Führungen können in einem Arbeitsgang geschliffen werden. Die Konstruktion beinhaltet keine Steuerkante oder sonstige Funktionselemente, die im montierten Zustand gemessen und anschließend in demontiertem Zustand eingestellt werden müssen. Auch daher ist die erfindungsgemäße Dosiervorrichtung kostengünstig in der Herstellung.

Vorteilhaft ist auch, dass der Niederdruckraum hydraulisch mit der Pumpe in Verbindung steht. Ein Förderdruck der Pumpe bestimmt damit den Druck im Niederdruckraum. Die Pumpe ist dabei bevorzugt eine Vorförderpumpe. An die Pumpe werden keine besonders hohen Anforderungen, insbesondere bezüglich eines Druckaufbaus, gestellt. Auch dies macht die Dosiervorrichtung kostengünstig.

In einer Ausgestaltung ist vorgesehen, dass die erfindungsgemäße Dosiervorrichtung ein flüssiges Reduktionsmittel, z.B. sog. AdBlue, zur Stickoxidreduktion in den Abgasstrom einspritzt. Damit ist die erfindungsgemäße Dosiervorrichtung Teil eines bekannten Systems zur selektiven katalytischen Reduktion (SCR). Das Dosierventil ist dabei in Abgasströmungsrichtung vor einem SCR-Katalysator angeordnet.

In einer weiteren Ausgestaltung ist alternativ oder zusätzlich vorgesehen, dass die erfindungsgemäße Dosiervorrichtung bei Bedarf Dieselkraftstoff zur Partikelfilterregeneration in den Abgasstrom einspritzt. Damit ist die erfindungsgemäße Dosiervorrichtung Teil eines bekannten Systems zur Entfernung von Rußpartikeln am Partikelfilter eines Dieselmotors. Das Dosierventil ist dazu stromaufwärts eines Oxidationskatalysators im Abgasrohr angeordnet.

Weitere Merkmale, Anwendungsmöglichkeiten und Vorteile der Erfindung ergeben sich aus der nachfolgenden Beschreibung eines Ausführungsbeispiels der Erfindung, das in der Zeichnung dargestellt ist. Dabei bilden alle beschriebenen oder dargestellten Merkmale für sich oder in beliebiger Kombination den Gegenstand der Erfindung. Es zeigen:
Fig. 1 das Umfeld der Erfindung und
Fig. 2 eine erfindungsgemäße, beispielhafte Dosiervorrichtung im Detail.

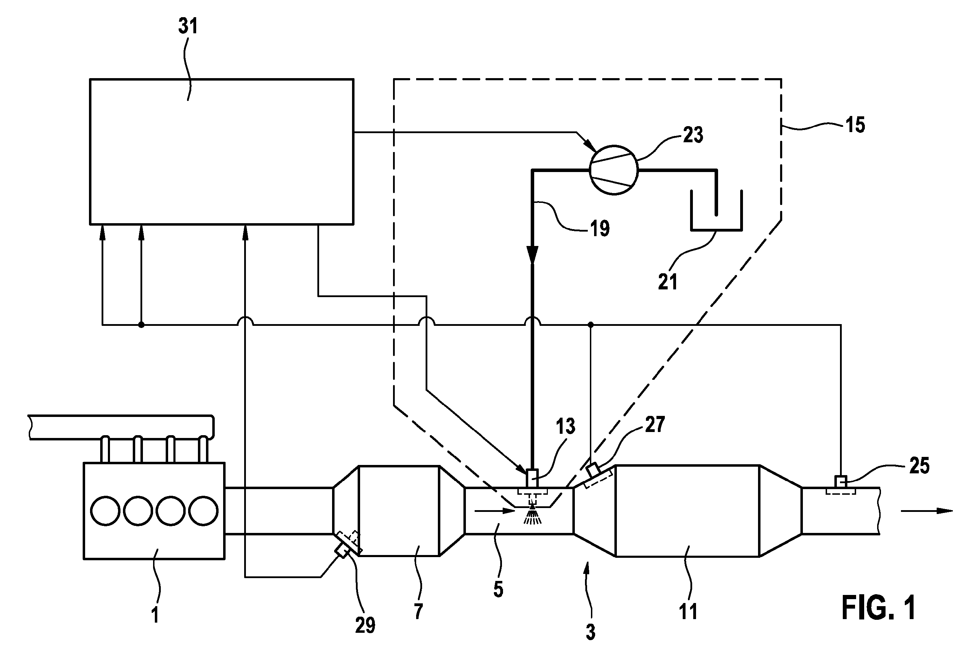

In Figur 1 ist eine Brennkraftmaschine 1 mit einer Abgasnachbehandlungseinrichtung 3 stark vereinfacht und schematisch dargestellt und zeigt das Umfeld der Erfindung. Die Abgasnachbehandlungseinrichtung 3 umfasst ein Abgasrohr 5, einen Oxidationskatalysator 7 und einen SCR-Katalysator 11 zur selektiven katalytischen Reduktion von gesundheitsschädlichem Stickoxid. Nicht dargestellt ist ein Partikelfilter, der üblicherweise stromabwärts des Oxidationskatalysators 7 angeordnet ist. Die Strömungsrichtung des Abgases durch das Abgasrohr 5 ist durch Pfeile (ohne Bezugszeichen) angedeutet.

Um den SCR-Katalysator 11 mit einem flüssigen Reduktionsmittel, z.B. einer Harnstoffwasserlösung (sog. AdBlue) oder einem anderen flüssigen Reduktionsmittel zu versorgen, ist stromaufwärts des SCR-Katalysators 11 am Abgasrohr 5 ein Dosierventil 13 zum Einbringen der Harnstoffwasserlösung angeordnet. Das Dosierventil 13 spritzt bei Bedarf, z.B. wenn eine hohe Konzentration von Stickoxiden im Abgas ermittelt wird, die Harnstoffwasserlösung stromaufwärts des SCR-Katalysators 11 in das Abgasrohr 5 ein. Mit dem heißen Abgas entwickelt sich aus der Harnstoffwasserlösung Ammoniakgas, mit dem im SCR-Katalysator 11 das gesundheitsschädliche Stickoxid zu unschädlichem Wasser und Stickstoff reduziert wird.

Das Dosierventil 13 ist Teil einer Dosiervorrichtung 15. Die Dosiervorrichtung 15 umfasst darüber hinaus eine Pumpe 23, vorzugsweise eine Vorförderpumpe, die in einer Förderleitung 19 zwischen einem Vorratstank 21 und dem Dosierventil 13 angeordnet ist. Die Förderleitung 19 versorgt das Dosierventil 13 mit Harnstoffwasserlösung aus dem Vorratstank 21.

Der Vollständigkeit halber sei noch auf in der Abgasnachbehandlungseinrichtung 3 angeordnete Sensoren, nämlich einen Stickoxid-Sensor 25, sowie TemperaturSensoren 27 und 29, hingewiesen. Die hier gezeigten Sensoren 25, 27 und 29 stellen jedoch nur eine beispielhafte Auswahl dar, da bei realen Abgasnachbehandlungseinrichtungen 3 noch weitere Sensoren im Bereich des Abgasrohrs 5 angeordnet sein können.

Die Sensoren 25, 27 und 29 sowie die Vorförder-Pumpe 23 und das Dosierventil 13 sind über Signalleitungen (ohne Bezugszeichen) mit einem Steuergerät 31 verbunden. Das Steuergerät 31 kann auch mehrere und verteilt angeordnete Steuergeräte umfassen.

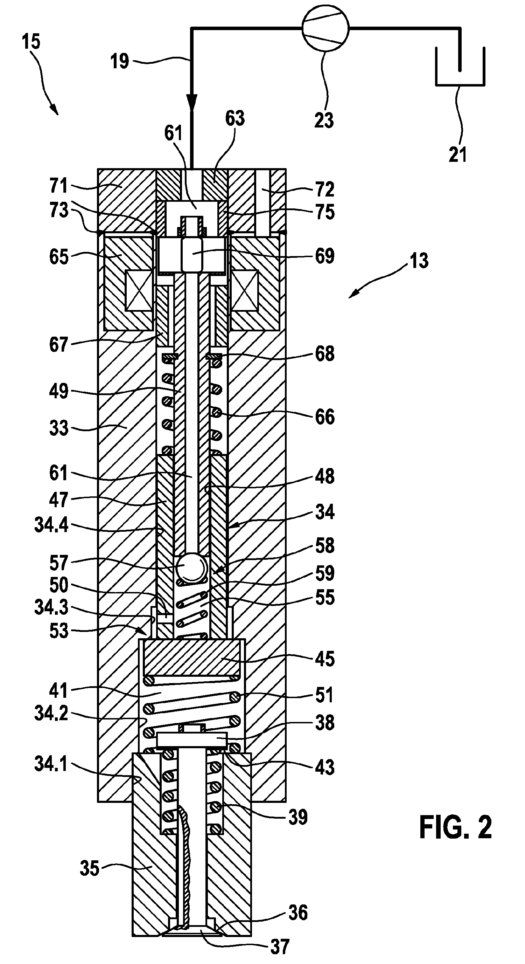

Figur 2 zeigt die erfindungsgemäße Dosiervorrichtung 15, insbesondere das Dosierventil 13, im Detail. Das Dosierventil 13 ist von einem Gehäuse 33 umschlossen, aus dem ein Düsenkörper 35 herausragt.

In dem Gehäuse 33 befindet sich eine Stufenbohrung 34 mit mehreren Abschnitten 34.1 bis 34.4, In dem ersten Abschnitt 34.1 der Stufenbohrung 34 ist der Düsenkörper 35 eingepresst.

Der zweite Abschnitt 34.2 der Stufenbohrung 34 begrenzt einen Düsenraum 41 in dem sich unter anderem eine Druckplatte 45 und eine erste Druckfeder 51 befinden.

In dem vierten Abschnitt 34.4 der Stufenbohrung 34 wird eine Pumpenhülse 47 dichtend und dennoch axial verschiebbar geführt.

An dem in Figur 2 oberen Ende des vierten Abschnitts 34.4 ist eine Magnethülse 67 eingepresst. Die Magnethülse 67 dient zusammen mit einem Anker 69 auch als Endanschlag für einen Kolben 49. Der Anker 69 ist fest mit dem Kolben 49 verbunden. In der Magnethülse 67 sind Nuten (ohne Bezugszeichen) oder Längsbohrungen eingearbeitet, die eine hydraulische Verbindung zwischen den von der Magnethülse 67 "getrennten" Teilen des Niederdruckraums 61 herstellen.

In dem Düsenkörper 35 wird eine nach außen öffnende Düsennadel 37 geführt. Die Düsennadel 37 verschließt durch die Federkraft einer Düsenschließfeder 39 den Düsenkörper 35 in einem Ventilsitz 36. Die Düsenschließfeder 39 stützt sich einenends gegen den Düsenkörper 35 und anderenends gegen Anschlag 38 an der Düsennadel 37 ab.

Die Düsennadel 37 öffnet, wenn der Druck in einem Düsenraum 41 so groß ist, dass die auf die Düsennadel 37 wirkenden hydraulischen Kräfte größer als die in Schließrichtung auf die Düsennadel 37 wirkenden Kräfte der Düsenschließfeder 39 sind.

Zur Einstellung des Hubs der Düsennadel 37 kann zwischen dem Anschlag 38 und dem Düsenkörper 35 eine Hubeinstellscheibe 43 angeordnet sein.

Der Düsenraum 41 wird in der in Figur 2 dargestellten Schließstellung von der Druckplatte 45 an einem dem Anschlag 38 gegenüberliegenden Ende des Düsenraums 41 verschlossen.

Die Druckplatte 45 ist Teil einer Pumpenhülse 47, die im vierten Abschnitt 34.4. der Stufenbohrung 34 des Gehäuses 33 axial beweglich geführt ist. Die Pumpenhülse 47 weist eine Mittenbohrung 48 auf, in der der Kolben 49 geführt wird. Der Kolben 49 ist hohlgebohrt. Außerdem sind in der Mittenbohrung 48 ein Rückschlagventil 58, umfassend ein als Kugel ausgebildetes Ventilglied 57 und eine zweite Druckfeder 59, sowie eine Rückstellfeder 66 angeordnet. Das Ventilglied 57 wird dabei durch die zweite Druckfeder 59 gegen die Öffnung des hohlgebohrten Kolbens 49 gepresst.

Die Mittenbohrung 48, das Ventilglied 57 und die Druckplatte 45 begrenzen einen Pumpenarbeitsraum 55. In der Pumpenhülse 47 ist eine Querbohrung 50 angeordnet, welche den Pumpenarbeitsraum 55 mit dem dritten Abschnitt 34.3 der Stufenbohrung 34 verbindet.

Der Hohlraum des Kolbens 49 bildet einen Niederdruckraum 61 des Dosierventils 13, wobei der Niederdruckraum 61 über einen hydraulischen Anschluss 63 mit der Förderleitung 19 verbunden ist. Im Niederdruckraum 61 herrscht somit der von der Pumpe 23 erzeugte Förderdruck.

Der hydraulische Anschluss 63 ist ein separates Bauteil, das dichtend in eine zentrale Bohrung (ohne Bezugszeichen) des Magnettopfs 71 eingesetzt und dort fixiert wird. Dies kann zum Beispiel durch eine Pressverbindung oder eine Schweißverbindung oder ein anderes Fügeverfahren erfolgen. Der hydraulische Anschluss 63 ist mit der Förderleitung 19 hydraulisch verbunden.

Der Kolben 49 wird durch Bestromung eines Elektromagneten 65 aus der dargestellten Schließstellung (in Figur 2 nach unten) bewegt und dient so als Pumpenkolben. Die Bestromung des Elektromagneten 65 wird vom Steuergerät 31 gesteuert. Der Elektromagnet 65 arbeitet gegen eine Kraft der Rückstellfeder 66, die koaxial zu dem Kolben 49 angeordnet ist. Die Rückstellfeder 66 liegt einenends an einer Oberkante der Pumpenhülse 47 und anderenends an einem am Kolben 49 angeordneten Sprengring 68 an.

Der Elektromagnet 65 ist an einem dem Düsenkörper 35 entgegengesetzten Ende im Gehäuse 33 des Dosierventils 13 eingelassen. Zur elektromagnetischen Betätigung ist am Kolben 49 der Anker 69 angeordnet, der in dem vierten Abschnitt 34.4 der Stufenbohrung 34 des Gehäuses 33 geführt ist. Der vierte Abschnitt 34.4 ist im Durchmesser größer als der Durchmesser des Kolbens 49.

Der Elektromagnet 65 wird von einen Magnettopf 71 bedeckt, wobei der Magnettopf 71 mit dem hydraulischen Anschluss 63 gleichzeitig auch das Dosierventil 13 zur Förderleitung 19 hin verschließt. Im Magnettopf 71 ist ein elektrischer Anschluss 72 für den Elektromagneten 65 vorgesehen. Der Magnettopf 71 ist durch Schweißnähte 73 mit dem Gehäuse 33 verbunden.

Als Anschlag für den Anker 69 dient in der in Figur 2 dargestellten Schließstellung eine Anschlaghülse 75, die in die zentrale Bohrung (ohne Bezugszeichen) des Magnettopfs 71 eingesetzt ist. Die Anschlaghülse 75 und die Position des hydraulischen Anschlusses 63 in der zentralen Bohrung des Magnettopfs begrenzen dabei die Hubbewegung des Kolbens 49. Durch die Länge der Anschlaghülse 75, aber auch die Einbautiefe des hydraulischen Anschlusses 63 in dem Magnettopf 75, können ein Volumen des Niederdruckraums 61 und ein Hub des Kolbens 49 und damit das gewünschte Fördervolumen des Dosierventils 13 bei der Montage eingestellt werden. Dadurch können Fertigungstoleranzen der anderen Bauteile ausgeglichen werden, so dass alle Exemplare einer Serie das gleiche Fördervolumen je Kolbenhub haben.

Die erfindungsgemäße Dosiervorrichtung 15 weist die Besonderheit auf, dass mit Ausnahme des Elektromagneten 65 sowie des Magnettopfs 72 mit montiertem hydraulischen Anschluss 63 von "unten" in das Gehäuse 33 eingesetzt werden können. Dabei bezieht sich "unten" auf die in Figur 2 dargestellte Ausrichtung der Dosiervorrichtung 15.

Diese Montierbarkeit von einer Seite ist ein wichtiger fertigungstechnischer Vorteil, weil er die Automatisierung der Montage erleichtert beziehungsweise erst ermöglicht.

Das Dosierventil 13 funktioniert folgendermaßen:

Das Dosierventil 13 wird über die Fördereitung 19 mit Harnstoffwasserlösung aus dem Vorratstank 21 versorgt. Dabei fließt die Harnstoffwasserlösung mit dem Förderdruck der Pumpe 23 in den Niederdruckraum 61 des Dosierventils 13.

In dem in Figur 2 dargestellten Ausgangszustand befindet sich der Kolben 49 in einer oberen Endposition und liegt an der Anschlaghülse 75 an. Wird der Elektromagnet 65 bestromt, wirkt über die Magnethülse 67 eine magnetische Kraft auf den Anker 69. In Folge dessen bewegt sich der Kolben 49 in Richtung Düsenkörper 35. Dadurch steigt der Druck im Pumpenarbeitsraum 55 so lange, bis sich die Pumpenhülse 47 und mit ihr die Druckplatte 45 ebenfalls in Richtung Düsenkörper 35 bewegt. Dabei wird eine Dichtkante 53 zwischen dem Gehäuse 33 und der Pumpenhülse 47 geöffnet.

Die Harnstoffwasserlösung wird von dem Kolben 49 und das Ventilglied 57 in den Düsenraum 41 gepresst, so dass dort der Druck ebenfalls ansteigt. Sobald die aus dem Druck im Düsenraum 41 resultierenden und auf die Düsennadel 37 wirkenden hydraulischen Kräfte die Federkraft der Düsenschließfeder 39 übersteigen, öffnet die Düsennadel 37.

Nach dem Ende der Bestromung bewegt sich der Kolben 49 durch die Federkraft der Rückstellfeder 66 nach oben in Richtung seiner Ausgangsposition. Dabei fällt der Druck in Pumpenarbeitsraum 55 ab. Die Düsennadel 37 wird durch die Federkraft der Düsenschließfeder 39 geschlossen und die Dichtkante 53 schließt durch die Federkraft der ersten Druckfeder 51.

Wird im Pumpenarbeitsraum 55 das Druckniveau des Niederdruckraums 61 unterschritten, öffnet die Kugel 57 des Rückschlagventils 58 den Niederduckraum 61. Auf diese Weise kann der Pumpenarbeitsraum 55 über die zentrale Bohrung im Kolben 49, die Querbohrung 50 in der Pumpenhülse 47 und den Abschnitt 34.3 der Stufenbohrung 34 wieder befüllt werden, bis die Kugel 57 des Rückschlagventils 58 den Niederduckraum 61 schließt. Dies geschieht, sobald der Druck im Pumpenarbeitsraum 55 gleich dem Druck im Niederdruckraum 61 ist. Damit ist die Befüllung des Pumpenarbeitsraums 55 abgeschlossen.

Die Federkraft der Düsenschließfeder 39 ist vorteilhafterweise so gewählt, dass das Druckniveau im Düsenraum 41 beim Öffnen der Düsennadel 37 deutlich über dem Druckniveau im Niederdruckraum 61 liegt. Das dort herrschende Druckniveau ist durch den Förderdruck der Pumpe 23 begründet. Somit wird die Düsennadel 37 im nicht angesteuerten Zustand immer mit einer ausreichend hohen Schließkraft zugehalten.

Das Fördervolumen des Dosierventils 13 ergibt sich einerseits aus der oberen Endposition des Körpers 49 am Anschlag an der Anschlaghülse 75 und andererseits aus der unteren Endposition am Anschlag an der Magnethülse 67. Die Anschlaghülse 75 eignet sich die durch Variation ihrer Länge beziehungsweise die Einpresstiefe zur Einstellung des Hubs des Kolbens 49 und damit zur Einstellung des Fördervolumens (Einspritzmenge) des Dosierventils 13.

In einer nicht dargestellten Ausgestaltung kann der Vorratstank 21 mit Dieselkraftstoff befüllt sein. Damit kann die Dosiervorrichtung 15 zur Regeneration eines Partikelfilters im Abgasrohr 5 verwendet werden.

Insbesondere bei größeren Dieselmotoren ist bspw. stromaufwärts des Partikelfilters und des Oxidationskatalysators 7 ein Brenner vorgesehen, der bei Bedarf eine Flamme erzeugt, die dazu dient, den zusätzlich in das Abgas eingespritzten Kraftstoff zu verdampfen. Dieses Abgas-Kraftstoff-Gemisch reagiert im Oxidationskatalysator 7 stark exotherm. In Folge dessen erreicht das Abgas die zur Regeneration des Partikelfilters erforderliche hohe Temperatur. Das Dosierventil 13 ist dazu stromaufwärts des Oxidationskatalysators 7 im Abgasrohr 5 angeordnet. Diese Ausgestaltung kann zusätzlich oder alternativ zum Einspritzen von Harnstoff-Wasser-Lösung stromaufwärts des SRC-Katalysators 11 installiert sein.

## Patentansprüche

1. Dosierventil (13) umfassend ein Gehäuse (33) und einen Elektromagneten (65), wobei in dem Gehäuse (33) eine Stufenbohrung (34) ausgebildet ist, wobei die Stufenbohrung (34) einen Niederdruckraum (61) begrenzt, **dadurch gekennzeichnet, dass** in einem Abschnitt (34.4) der Stufenbohrung (34) eine Pumpenhülse (47) dichtend geführt ist, dass in einer Mittenbohrung (48) der Pumpenhülse (47) ein hohlgebohrter Kolben (49) dichtend geführt ist, dass in dem Niederdruckraum (61) eine Magnethülse (67) an dem Gehäuse (33) befestigt ist, dass an einem der Magnethülse (67) gegenüberliegenden Seite des Niederruckraums (61) eine Anschlaghülse (75) angeordnet ist, und dass ein Hub des Kolbens (49) von der Magnethülse (67) und/oder der Anschlaghülse (75) begrenzt wird.

2. Dosierventil (13) nach Anspruch 1, **dadurch gekennzeichnet, dass** die Anschlaghülse (75) in eine Bohrung des Magnettopf (71) eingesetzt ist, dass der Magnettopf (71) mit dem Gehäuse (33) verbunden ist, und dass in der Bohrung ein hydraulischer Anschluss (63) dichtend und fest mit dem Magnettopf (75) verbunden ist.

3. Dosierventil (13) nach Anspruch 1 oder 2, **dadurch gekennzeichnet, dass** das Dosierventil (13) neben dem Niederdruckraum (61) einen Pumpenarbeitsraum (55) aufweist, und dass der Niederdruckraum (61) und der Pumpenarbeitsraum (55) durch ein Rückschlagventil (58, 57, 59) getrennt sind.

4. Dosierventil (13) nach einem der vorhergehenden Ansprüche, **dadurch gekennzeichnet, dass** in dem Niederdruckraum (61) ein Anker (69) des Elektromagneten (65) angeordnet ist, und dass der Anker (69) mit dem Kolben (49) verbunden ist.

5. Dosierventil (13) nach einem der vorhergehenden Ansprüche, **dadurch gekennzeichnet, dass** die Pumpenhülse (47) mit einer Druckplatte (45) in einen Düsenraum (41) ragt.

6. Dosierventil (13) nach Anspruch 5, **dadurch gekennzeichnet, dass** in dem Düsenraum (41) eine Düsennadel (37) angeordnet ist, und dass der Düsenraum (41) über eine Querbohrung (50) mit dem Pumpenarbeitsraum (55) hydraulisch in Verbindung steht, wenn die Druckplatte (45) von einer Dichtkante (53) des Gehäuses (33) abgehoben ist.

7. Dosierventil (13) nach einem der vorhergehenden Ansprüche, **dadurch gekennzeichnet, dass** das im Pumpenarbeitsraum (55) befindliche Medium durch den Kolben (49) mit Druck beaufschlagt wird.

8. Dosierventil (13) nach einem der vorhergehenden Ansprüche, **dadurch gekennzeichnet, dass** der Niederdruckraum (61) hydraulisch mit der Pumpe (23) in Verbindung steht.

9. Dosierventil (13) nach einem der vorhergehenden Ansprüche, **dadurch gekennzeichnet, dass** die Montage aller in der Stufenbohrung (34, 34.1, 34.2, 34.2, 34.4) angeordneten Bauteile (75, 69, 47, 68, 66, 57, 59, 45, 51, 38, 37, 35) von einem Ende des Gehäuses (33) erfolgen kann.

10. Dosierventil (13) nach einem der Ansprüche 2 bis 9, **dadurch gekennzeichnet, dass** ein Hub des Kolbens (49) durch die Länge und/oder die Positionierung des hydraulischen Anschlusses (63) in dem Magnettopf (75) begrenzt wird.

11. Dosierventil (13) nach einem der Ansprüche 2 bis 10, **dadurch gekennzeichnet, dass** ein Hub des Kolbens (49) durch eine Länge der Anschlaghülse (75) begrenzt wird

12. Dosiervorrichtung (15) zum Einbringen eines flüssigen Mediums in einen Abgasstrom einer Brennkraftmaschine (1) eines Kraftfahrzeugs, umfassend eine Pumpe (23) zum Fördern des flüssigen Mediums, eine Förderleitung (19) zwischen einem Vorratstank (21) und einem Dosierventil (13), **dadurch gekennzeichnet, dass** das Dosierventil ein Dosierventil (13) nach einem der vorhergehenden Ansprüche ist.

13. Dosiervorrichtung (15) nach Anspruch 12, **dadurch gekennzeichnet, dass** die Dosiervorrichtung (15) ein flüssiges Reduktionsmittel zur Stickoxidreduktion in den Abgasstrom einspritzt.

14. Dosiervorrichtung (15) nach Anspruch 12, **dadurch gekennzeichnet, dass** die Dosiervorrichtung (15) Dieselkraftstoff zur Partikelfilterregeneration in den Abgasstrom einspritzt.

## Claims

1. Dosing valve (13) comprising a housing (33) and an electromagnet (65), wherein a stepped bore (34) is formed in the housing (33), wherein the stepped bore (34) delimits a low-pressure space (61), **characterized in that** a pump sleeve (47) is guided sealingly in one section (34.4) of the stepped bore (34), **in that** a hollow-bored piston (49) is guided sealingly in a central bore (48) of the pump sleeve (47), **in that** a magnet sleeve (67) is fastened to the housing (33) in the low-pressure space (61), **in that** a stop sleeve (75) is arranged on an opposite side of the low-pressure space (61) from the magnet sleeve (67), and **in that** a stroke of the piston (49) is limited by the magnet sleeve (67) and/or by the stop sleeve (75).

2. Dosing valve (13) according to Claim 1, **characterized in that** the stop sleeve (75) is inserted into a bore in the magnet pot (71), **in that** the magnet pot (71) is connected to the housing (33), and **in that** a hydraulic connection (63) is connected sealingly and firmly in the bore to the magnet pot (75).

3. Dosing valve (13) according to Claim 1 or 2, **characterized in that** the dosing valve (13) has a pump working space (55) in addition to the low-pressure space (61), and **in that** the low-pressure space (61) and the pump working space (55) are separated by a check valve (58, 57, 59).

4. Dosing valve (13) according to one of the preceding claims, **characterized in that** an armature (69) of the electromagnet (65) is arranged in the low-pressure space (61), and **in that** the armature (69) is connected to the piston (49).

5. Dosing valve (13) according to one of the preceding claims, **characterized in that** the pump sleeve (47) projects with a pressure plate (45) into a nozzle space (41).

6. Dosing valve (13) according to Claim 5, **characterized in that** a nozzle needle (37) is arranged in the nozzle space (41), and **in that** the nozzle space (41) is connected hydraulically to the pump working space (55) by means of a transverse bore (50) when the pressure plate (45) is raised from a sealing edge (53) of the housing (33).

7. Dosing valve (13) according to one of the preceding claims, **characterized in that** the medium in the pump working space (55) is subjected to pressure by the piston (49).

8. Dosing valve (13) according to one of the preceding claims, **characterized in that** the low-pressure space (61) is connected hydraulically to the pump (23).

9. Dosing valve (13) according to one of the preceding claims, **characterized in that** the installation of all the components (75, 69, 47, 68, 66, 57, 59, 45, 51, 38, 37, 35) arranged in the stepped bore (34, 34.1, 34.2, 34.2, 34.4) can take place from one end of the housing (33).

10. Dosing valve (13) according to one of Claims 2 to 9, **characterized in that** a stroke of the piston (49) is limited by the length and/or the positioning of the hydraulic connection (63) in the magnet pot (75).

11. Dosing valve (13) according to one of Claims 2 to 10, **characterized in that** a stroke of the piston (49) is limited by a length of the stop sleeve (75).

12. Dosing device (15) for introducing a liquid medium into an exhaust gas stream of an internal combustion engine (1) of a motor vehicle, comprising a pump (23) for delivering the liquid medium, a delivery line (19) between a storage tank (21) and a dosing valve (13), **characterized in that** the dosing valve is a dosing valve (13) according to one of the preceding claims.

13. Dosing device (15) according to Claim 12, **characterized in that** the dosing device (15) injects a liquid reducing agent for nitrogen oxide reduction into the exhaust gas stream.

14. Dosing device (15) according to Claim 12, **characterized in that** the dosing device (15) injects diesel fuel for particulate filter regeneration into the exhaust gas stream.

## Revendications

1. Soupape de dosage (13) comprenant un carter (33) et un électroaimant (65), un alésage à étages (34) étant réalisé dans le carter (33), l'alésage à étages (34) délimitant une chambre de basse pression (61), **caractérisée en ce qu'**une douille de pompe (47) est guidée de façon étanche dans une section (34.4) de l'alésage à étages (34), qu'un piston (49) percé en creux est guidé de façon étanche dans un alésage central (48) de la douille de pompe (47), qu'une douille aimantée (67) est fixée au carter (33) dans la chambre de basse pression (61), qu'une douille de butée (75) est disposée au niveau d'un côté de la chambre de basse pression (61) opposé à la douille aimantée (67) et qu'une course du piston (49) est délimitée par la douille aimantée (67) et/ou par la douille de butée (75).

2. Soupape de dosage (13) selon la revendication 1, **caractérisée en ce que** la douille de butée (75) est insérée dans un alésage de la cavité magnétique (71), que la cavité magnétique (71) est reliée au carter (33) et qu'un raccord (63) hydraulique est relié fixement et de façon étanche à la cavité magnétique (75) dans l'alésage.

3. Soupape de dosage (13) selon la revendication 1 ou 2, **caractérisée en ce que** la soupape de dosage (13) comporte, à côté de la chambre de basse pression (61), une chambre de travail de pompe (55) et que la chambre de basse pression (61) et la chambre de travail de pompe (55) sont séparées par une soupape de retenue (58, 57, 59).

4. Soupape de dosage (13) selon l'une quelconque des revendications précédentes, **caractérisée en ce qu'**une ancre (69) de l'électroaimant (65) est disposée dans la chambre de basse pression (61) et que l'ancre (69) est reliée au piston (49).

5. Soupape de dosage (13) selon l'une quelconque des revendications précédentes, **caractérisée en ce que** la douille de pompe (47) ressort avec une plaque de pression (45) dans une chambre de buse (41).

6. Soupape de dosage (13) selon la revendication 5, **caractérisée en ce qu'**une aiguille de buse (37) est disposée dans la chambre de buse (41) et que la chambre de buse (41) est reliée de façon hydraulique à la chambre de travail de pompe (55) via un alésage transversal (50) lorsque la plaque de pression (45) est décrochée d'un bord étanche (53) du carter (33).

7. Soupape de dosage (13) selon l'une quelconque des revendications précédentes, **caractérisée en ce que** l'agent se trouvant dans la chambre de travail de pompe (55) est alimenté en pression par le piston (49).

8. Soupape de dosage (13) selon l'une quelconque des revendications précédentes, **caractérisée en ce que** la chambre de basse pression (61) est reliée de façon hydraulique à la pompe (23).

9. Soupape de dosage (13) selon l'une quelconque des revendications précédentes, **caractérisée en ce que** le montage de tous les composants (75, 69, 47, 68, 66, 57, 59, 45, 51, 38, 37, 35) disposés dans l'alésage à étages (34, 34.1, 34.2, 34.2, 34.4) peut s'effectuer depuis une extrémité du carter (33).

10. Soupape de dosage (13) selon l'une quelconque des revendications 2 à 9, **caractérisée en ce qu'**une course du piston (49) est délimitée par la longueur et/ou le positionnement du raccord (63) hydraulique dans la cavité magnétique (75).

11. Soupape de dosage (13) selon l'une quelconque des revendications 2 à 10, **caractérisée en ce qu'**une course du piston (49) est délimitée par une longueur de la douille de butée (75).

12. Dispositif de dosage (15) permettant d'amener un agent fluide dans un flux de gaz d'échappement de moteur à combustion interne (1) de véhicule automobile, comprenant une pompe (23) servant à transporter l'agent fluide, une conduite de transport (19) située entre un réservoir de réserve (21) et une soupape de dosage (13), **caractérisé en ce que** la soupape de dosage est une soupape de dosage (13) selon l'une quelconque des revendications précédentes.

13. Dispositif de dosage (15) selon la revendication 12, **caractérisé en ce que** le dispositif de dosage (15) injecte un agent de réduction fluide pour la réduction d'oxyde d'azote dans le flux de gaz d'échappement.

14. Dispositif de dosage (15) selon la revendication 12, **caractérisé en ce que** le dispositif de dosage (15) injecte du carburant diesel pour la régénération du filtre à particules dans le flux de gaz d'échappement.
